# EUROPEAN PATENT SPECIFICATION

(11) **EP 1 071 317 B1**
(45) Date of publication and mention of the grant of the patent: **06.03.2002**
(21) Application number: 99914384.5
(22) Date of filing: 14.04.1999
(51) Int. Cl.: A01G 9/24

(54) **GREENHOUSE**
GEWÄCHSHAUS
SERRE

(30) Priority: 16.04.1998 NL 1008903
(43) Date of publication of application: 31.01.2001
(73) Proprietor: Suria Holdings, S.a.r.l., 1528 Luxemburg (LU)
(72) Inventor: VEN, Livien, Domien, B-2018 Antwerpen (BE); SUREDA, Michel, B-2140 Borgerhout (BE)
(74) Representative: Debrabandere, René
(86) International application number: BE9900050
(87) International publication number: WO9953745

(56) References cited:
- EP-A- 0 371 000
- GB-A- 2 215 357
- US-A- 4 095 369
- US-A- 4 219 008
- US-A- 4 312 157

## Description

This invention relates to a greenhouse consisting of a bottom, opaque and insulated standing walls and a flat roof which consists of at least one longitudinal, almost flat strip which is opaque.

In conventional greenhouses, the walls and the roof are mainly formed of translucent material such as glass or synthetic material.

The working of such a greenhouse is based on the fact that the wavelength of the sunlight coming in through said material is altered when it is reflected by the ground or the plants in the greenhouse and in that said wavelength is retained by the material, so that the heat stays in the greenhouse.

When there is a lot of sun, the heat may become too high, and the incidence of the solar rays is limited by putting light-tempering mats on the roof.

Whereas such greenhouses give good results in regions with a moderate climate, they cannot be used as such in regions where there is a lot of sun, such as in deserts.

It is already known to build greenhouses in such regions whose standing walls are opaque and insulated, whereas collapsible mats are provided on the translucent roof, equipped with reflectors, for example made of aluminium, and which only transmit a restricted quantity of light.

The collapsible mats are relatively expensive and not ultraviolet-resistant, so that they need to be replaced regularly.

Moreover, even with these mats the greenhouse still needs to be cooled. Such cooling, for example by means of cooling air, requires extra energy and is thus relatively expensive. Moreover, it is very difficult to evenly cool the entire greenhouse.

A greenhouse of the type mentioned in the first paragraph with opaque upstanding walls and a roof formed by one opaque strip is disclosed in GB-A-2.215.357. This greenhouse incorporates a two level glazing on one face. A system of moveable insulation panels are arranged over the low level glazing. The roof is slanting and opaque and a system of moveable insulated panels for a reflective ceiling is arranged underneath the roof.

The present invention aims a greenhouse which does not have the above-mentioned and other disadvantages and which is thus relatively inexpensive, and which allows for a good and even temperature regulation in the greenhouse with a minimum of energy consumption.

This aim is reached according to the invention in that the flat roof is horizontal and consists of a number of longitudinal strips formed by mirrors which are directed in the east/westward direction, which can rotate around an axis of rotation directed in their longitudinal direction and which can thus follow the movement of the sun according to the seasons and can make the top side of the greenhouse practically light-tight when rotated in their horizontal or lying position, whereby means are provided to rotate these mirrors and direct them to the sun and these mirrors are part of a device for producing steam comprising at least one collector situated above the mirrors and comprising a pipe for fluid and a mirror for collecting solar rays reflected by the mirrors and reflecting them to the pipe.

EP-A-0.371.000 discloses a device for providing shade in for example a classic greenhouse with transparent upstanding walls, which device is formed by a number of parallel strips which may be rotated around an axis extending in their longitudinal direction. Each strip consists of an upper strip portion forming a solar cell and a lower strip portion with an upper face forming a mirror and a lower face being reflecting.

US-A-4.095.369 concerns a greenhouse which is provided with a cover device arranged beneath a roof of pervious material supported by a support device. No upstanding walls are mentioned. The cover device comprises a number of pivotable substantially cylindrical parabolic reflectors. Along the focal lines of these reflectors there is arranged a respective conduit for conveying a heat carrier. The conduits are part of a circulation system for the heat carrier. If the collectors are directed to the sun, they reflect the energy of the sun to their conduit.

US-A-4.219.008 discloses a usual greenhouse with transparent upstanding walls comprising beneath the transparent roof a number of parallel pivotable flat strips. Each flat strip has a dark, light absorbing outer surface and an oppositely facing reflective surface and a tube disposed along the longitudinal axis for conducting a fluid therethrough.

According to the invention, the means for rotating the mirrors are preferably means for rotating them in groups of several mirrors or are means for rotating them individually.

Preferably the mirrors can rotate around an axis situated halfway their width.

The bottom side of the mirrors may reflect the light in a diffused manner.

The above-described greenhouse in which the strips are mirrors, is particularly interesting as part of a device for producing steam which can be used in a steam turbine for the production of electricity or in an evaporator for desalinating seawater, whereby at least one collector is erected above the mirrors in which fluid is heated.

Through the greenhouse can be provided a pipe through which flows cooling water and/or the produced fresh water to heat the greenhouse and/or to water the plants in the greenhouse by means of sprinklers connected to it or in order to guarantee the required humidity level in the greenhouse.

In order to better explain the characteristics of the invention, the following preferred embodiments of a greenhouse according to the invention are described as an example only without being limitative in any way, with reference to the accompanying drawings, in which:
figure 1 schematically represents a device for using solar energy of which greenhouses according to the invention form a part;
figure 2 schematically represents a cross section of a greenhouse according to the invention from the device in figure 1;
figure 3 shows a section analogous to that in figure 2, but with reference to another position of the mirrors;
figure 4 represents the detail indicated by F4 in figure 3 to a larger scale;
figures 5, 6 and 7 schematically represent the position of the mirrors for one greenhouse at three different moments of the day.

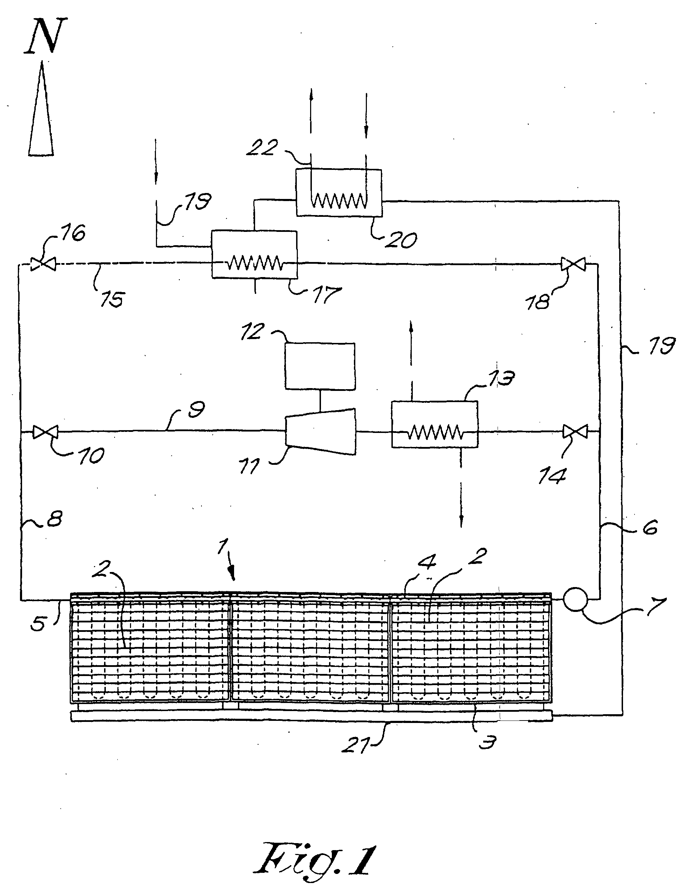

The device for using solar energy which is schematically represented in figure 1 contains a device 1 for producing steam which mainly consists of several series, three in the example represented, of parallel, strip-shaped, rotatable flat mirrors 2, forming the roof of greenhouses 3, a collector 4-5 in the shape of a longitudinal, bent mirror 4 above every series of mirrors 2 which is directed with its opening towards the flat mirrors 2, and a pipe 5 extending under the successive collectors 4.

The mirrors 2 extend with their longitudinal direction in the east/westward direction and can rotate around a geometrical axis which extends halfway their width in their longitudinal direction.

The collectors 4-5 are also directed in the longitudinal direction of the mirrors 2.

The construction of the mirrors 2 and their rotation will be further explained in detail together with the construction and the working of the greenhouses 3.

The pipe 5 is connected downstream to a water supply pipe 6 in which is provided a pump 7, and upstream to a steam pipe 8.

The steam pipe 8 is connected to the water supply pipe 6 by a first pipe 9 in which are successively provided a cock 10, a steam turbine 11 onto which is coupled a generator 12, a condenser 13 and a second cock 14 on the one hand, and by a second pipe 15 in which are successively provided a cock 16, an evaporator 17 and a second cock 18 on the other hand.

Through the evaporator 17 extends a secondary pipe 19 in which is provided a condenser 20 and which opens in a duct 21 which extends along the greenhouses 3, whereby the cooling pipe 22 extends through this condenser 20.

The working of such a device 1 for producing and utilizing steam is as follows.

The strip-shaped flat mirrors 2 forming the roofs of the greenhouses 3 reflect the collected solar radiation to the bent mirror 4 erected on top of them, which further reflects this radiation to the pipe 5.

As a result of this, water is then heated under the successive mirrors 4 in this pipe 5, this water is evaporated into steam and this steam is overheated.

This overheated steam flows via the steam pipe 8 to the pipes 9 and 15 in a proportion which is determined by the position of the cocks 10 and 14, 16 and 18 respectively.

The steam in the pipe 9 drives the steam turbine 11 which drives the generator 12, whereas the used and condensed steam flows back to the pipe 5 via the water supply pipe 6 to be heated again and to be transformed into overheated steam.

The steam in the pipe 15 makes sure that seawater which is supplied through the pipe 19 is evaporated in the evaporator 17. The steam which is produced there, is condensed into fresh water in the condenser 20 which is supplied to the duct 21.

Characteristic for the invention are the greenhouses 3 which are analogous to what is called a phytotron, with this major difference, however, that all the energy is supplied by the sun and that the light is not provided by lamps but consists of sunlight.

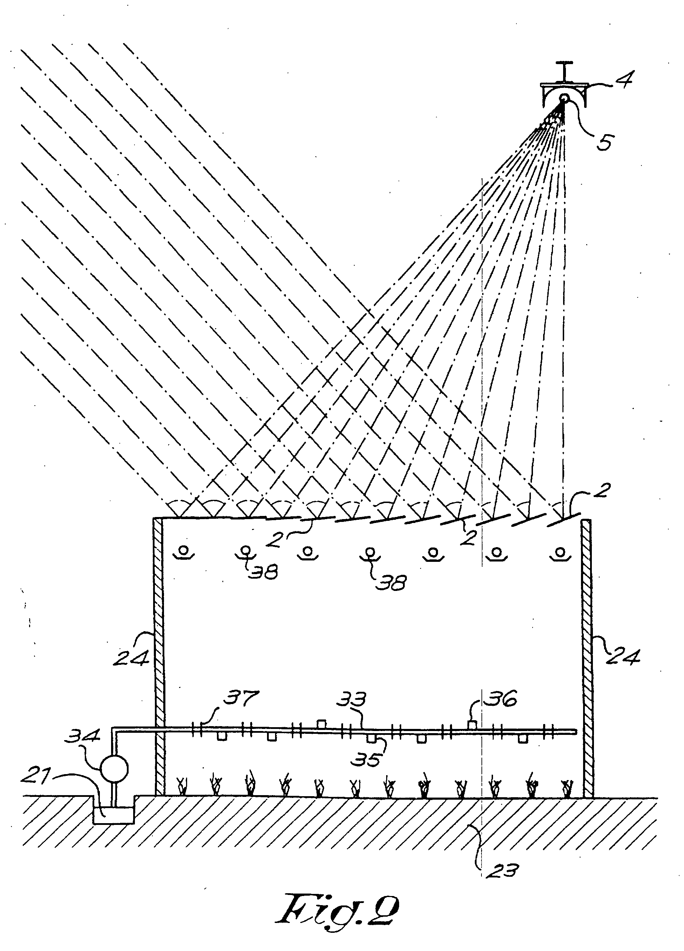

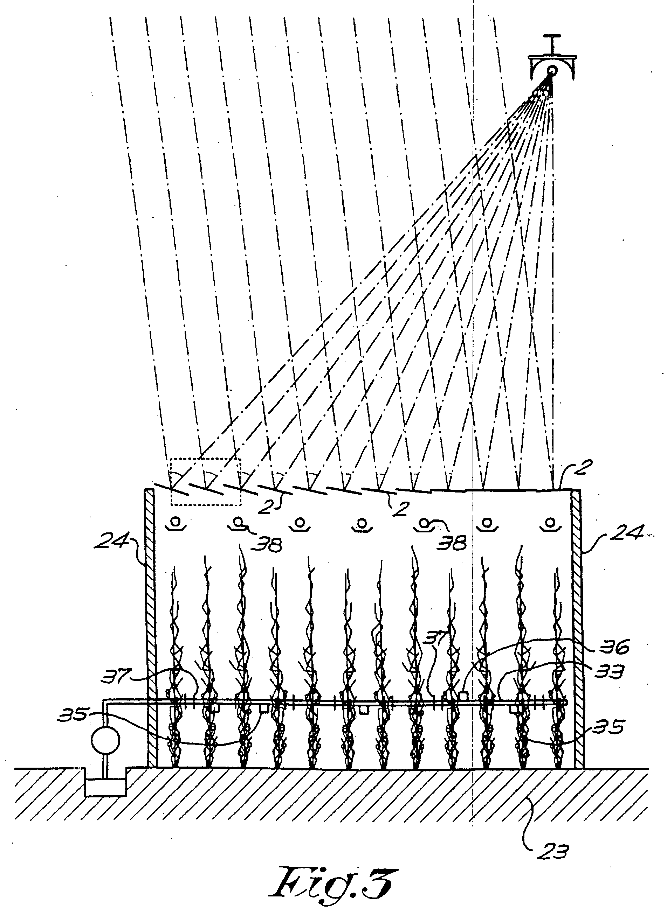

As in a phytotron, as represented in figures 2 and 3, each greenhouse 3 consists of a bottom 23 and four standing walls 24 which are opaque and heavily thermally insulated.

As already mentioned, the roof of every greenhouse 3 is formed of a series of mirrors 2.

Every mirror 2 consists of a strip 25 having a width of for example some 50 cm and a length of about 10 m, whose top side is reflective, for example coated with a reflective foil or a reflective layer, and whose bottom side reflects the light in a diffused manner, for example which is coated with a layer which reflects the light in a diffuse manner.

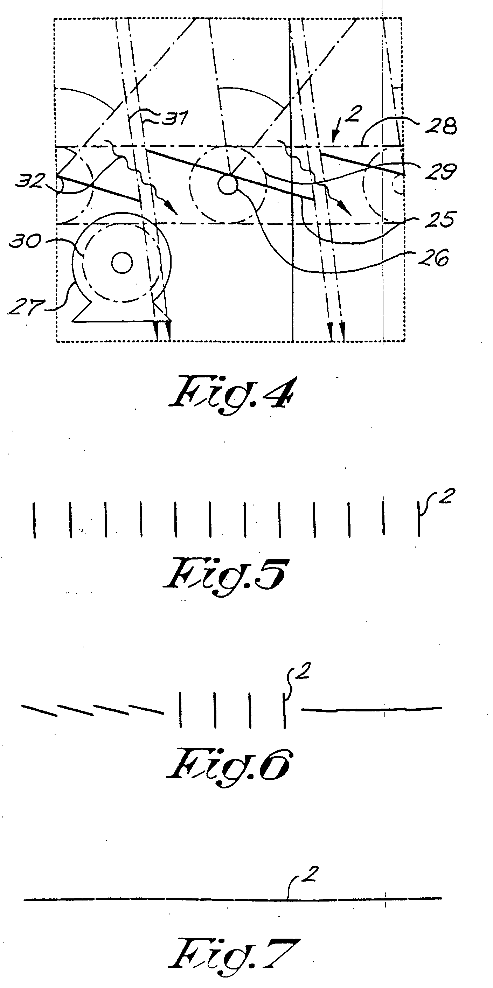

The strip 25, as represented in detail in figure 4, is fixed with its bottom side to a pipe 26 which is bearing-mounted in several places in a frame in a manner which is not represented.

The mirrors 2 can rotate around an axis in their longitudinal direction, either all together or individually, but preferably in groups of several mirrors, for example four, which coincides with the axis of their pipe 26, by means of a motor 27 through the agency of a transmission which contains a chain 28 in the given example running over chain wheels 29 at one end of the pipes 26 and a chain wheel 30 on the shaft of the motor 27.

The motors 27 are controlled by means of a control device, such that the mirrors 2 are normally directed with their reflective top side towards the sun and reflect onto the mirror 4, but if required this embodiment can be deviated from.

The mirrors 2 thus follow the movement of the sun, i.e., since they are directed in the east/westward direction, the seasonal movement of the sun following an angle of 46° between summer and winter.

Figures 2 and 3 represent the situation at the thirtieth degree of latitude. In the early part of the winter, the solar rays form an angle of 53° with the zenith here, as represented in figure 2, and in the early part of the summer, they form an angle of 7° with said zenith, as represented in figure 3.

At this degree of latitude, the sun thus remains on one side of the zenith. The only collector 4-5 which extends in the east/westward direction is therefore situated above the most northward situated mirror 2 of the series forming a roof.

It is clear that a number of mirrors 2 reflecting solar rays to this collector 4-5 are rotated.

This implies that sunlight falls directly in the greenhouse 3 between two neighbouring rotated mirrors 2, as is represented in figure 4 by means of the chain lines 31. The distance between these chain lines 31 represents the width of the beam of rays falling in the greenhouse 3.

Between these neighbouring mirrors 2 also penetrates diffused light, as represented by the arrows 32 in figure 4.

When two neighbouring mirrors 2 are situated in their horizontal position, they practically touch, so that neither direct light, nor diffused light can penetrate in between them into the greenhouse 3.

Through every greenhouse 3 extend pipes 33 which are connected to the duct 21 via a pump 34. In the greenhouse 3, these pipes 33 are provided with adjustable, downward directed sprinklers 35 and adjustable, upward directed sprinklers 36. Further, fins 37 can be provided on certain pipes 33 for the heat exchange with the space inside the greenhouse 3.

Under the roof are provided fittings with tube lights 38 of the type which is especially designed for casting light on plants.

These fittings have upward directed reflectors, such that the light of the tube lamps 38 is reflected towards the roof and thus towards the mirrors 2.

The working of the above-described greenhouses 3 is as follows.

Early in the morning, the sun is still too low above the horizon and the solar radiation is not sufficient to produce overheated steam in the pipe 5.

Said solar radiation is therefore used entirely for the plants in the greenhouse 3 and all the mirrors 2 are placed almost vertically as is schematically represented in figure 5. Thanks to the bottom side of the mirrors 2 reflecting the light in a diffused manner, this radiation is reflected in the greenhouse 3 as diffused light.

As soon as the solar radiation makes it possible to produce enough steam, the mirrors 2 are rotated such that they reflect the solar rays to the collector 4-5, and the cocks 10 and 14 are opened first and, if the amount of steam is sufficient to make also the evaporator 17 work, also the cocks 16 and 18 will be subsequently opened.

At noon, when the sun is situated at its highest point above the horizon, the mirrors 2 are in the position as represented in figure 2 in the early part of the winter, and in the position as represented in figure 3 in the early part of the summer.

Between the rotated mirrors 2, a small amount of direct solar radiation will thus enter the greenhouse 3, whereas a large amount of diffused light is spread in the greenhouse 3. Besides, too much direct sunlight is disadvantageous for the photosynthesis of most plants.

If all the solar radiation would fall directly on the plants in the greenhouse 3, these plants would burn. Shadow plants for example, only require a radiation energy of 200 to 300 Watt per m², whereas in the desert the solar radiation amounts to 1000 Watt per m².

It should be noted that in the winter, the mirrors 2 are on average inclined more than in the summer, so that during the winter, when there is sunlight for a shorter length of time, comparatively more diffused light falls in the greenhouse 3, such that the total amount of diffused light does not differ much in summer and in winter.

The surface of the mirrors 2 is generously calculated, so that during a large part of the day and especially around noon, more solar radiation is reflected by the mirrors 2 then required for the steam production.

This surplus is prevented from reaching the collector 4-5 and is led to the inside of the greenhouse 3, partly in the form of diffused light, by successively rotating different groups of a number of mirrors 2, in the given example four, in their almost vertical position, as is schematically represented in figure 6.

Through the bottom sides of the mirrors 2 which reflect the light in a diffused manner, a large quantity of diffused light thus enters the inner space of the greenhouse 3 between said mirrors 2, such that a sufficient amount of energy enters the greenhouse 3 to allow for an optimum photosynthesis of the plants.

By successively or sequentially rotating other mirrors 2, other parts of the greenhouse 3 are each time cast light on.

At night, all the mirrors 2 forming the roof of a greenhouse 3 are rotated in their horizontal position, as is schematically represented in figure 7, so that as little heat as possible escapes from the space inside the greenhouse 3. Light is cast on the plants by the tube lamps 38, whose light is reflected in a diffused manner in the above-mentioned space by the bottom sides of the mirrors 2 reflecting it in a diffused manner.

The steam for the steam turbine 11 and the desalination must then be produced in conventional ways by a steam boiler.

As the general power consumption is lower at night than during the day, part of the current can easily be used for the tube lamps 38.

As the incident rays mainly come in in a diffused manner and are spread over a large surface, the space inside the greenhouse 3 hardly heats up. Besides, the entering or released heat is situated at a relatively large distance from the bottom 23, for example at four metres, and escapes immediately through the gaps between the rotated mirrors 2.

Thus, even more heat is extracted from the space, so that it will have to be heated in order to maintain the required temperature for an ideal photosynthesis.

This is realized by pumping desalinated water from the duct 21 through the pipe 33 equipped with fins 37 into the greenhouse 3. The water in this duct 21 is condensed steam from the condenser 20 which has been condensed by seawater at for example 30 to 35°C and which has a temperature of about 40°C or more.

This same water is also used to water the plants when necessary by means of remote-controlled adjustable sprinklers 35 in pipes 33 and to obtain the required humidity level in the greenhouse 3 by means of remote-controlled adjustable sprinklers 36.

Any remaining water can be used to cool the condenser 13 or the steam turbine 11.

During the day, the greenhouses 3 thus do not consume any other energy than solar energy. The entire device 1 will even produce a considerable surplus of electricity which can be used for all purposes, for example for the energy supply of air conditioning appliances. This device also produces the necessary water for the plants.

Thus, the whole is very economical, and an optimal growth of the plants can be guaranteed in an easy way.

It is clear that the number of greenhouses 3 is not limited to three. An entire field of several hectares can be formed in this way.

The roof of every greenhouse must not necessarily consist of just one series of mirrors 2. The roof of a single greenhouse 3 may contain several series of mirrors 2; likewise, also a single series of mirrors 2 may form the roof of several greenhouses 3.

The collector 4-5 must not necessarily be situated above an extreme mirror 2. Also more than one collector 4-5 can be erected above a series of mirrors 2.

The mirrors 2 must not necessarily be directed in the east/westward direction. They may also be directed with their longitudinal direction north/southward, in which case the mirrors 2 which are used for the production of steam follow the sun in the course of the day.

In this case as well, groups of mirrors 2 are sequentially rotated such that they do not reflect any light towards the collector 4-5, but reflect diffused light in the greenhouse 3.

## Claims

1. Greenhouse comprising a bottom (23), opaque and insulated standing walls (24) and a flat roof which consists of at least one longitudinal, almost flat strip (25) which is opaque, **characterized in that** the flat roof is horizontal and consists of a number of longitudinal strips formed by mirrors (2) which are directed in the east/westward direction, which can rotate) around an axis of rotation directed in their longitudinal direction and which can thus follow the movement of the sun according to the seasons and can make the top side of the greenhouse (3) practically light-tight when rotated in their horizontal or lying position, whereby means (27-30) are provided to rotate these mirrors (2) and direct them to the sun and whereby these mirrors (2) are part of a device for producing steam comprising at least one collector (4-5) situated above the mirrors (2) and comprising a pipe (5) for fluid and a mirror (4) for collecting solar rays reflected by the mirrors (2) and reflecting them to the pipe (5).

2. Greenhouse according to claim 1, **characterized that,** the means (27-30) to rotate the mirrors (2) are means able to rotate them in groups of several mirrors (2).

3. Greenhouse according to claim 1, **characterized in that** the means (27-30) to rotate the mirrors (2) are means able to rotate them individually.

4. Greenhouse according to any of the preceding claims, **characterized in that** the mirrors (2) can rotate around an axis situated halfway their width.

5. Greenhouse according to any of the preceding claims, **characterized in that** the bottom side of the mirrors (2) reflects the light in a diffused manner.

6. Greenhouse according to any of the preceding, **characterized in that** it is part of a device (1) for producing steam which is used in a steam turbine (11) for the production of electricity and/or in an evaporator (17) for desalinating seawater.

7. Greenhouse according to claim 6, **characterized in that** a pipe (33) is provided through it through which flows cooling water and/or the produced fresh water to heat the greenhouse (3) and/or to water the plants in the greenhouse by means of sprinklers (35-36) connected to it and/or to guarantee the required humidity level in the greenhouse (3).

8. Greenhouse according to claim 2, or 3, **characterized in that** the means (27-30) for rotating the mirrors (2) of a greenhouse (3) are controlled such by a control device that, when there is little solar radiation, they are all turned standing, such that light is reflected inside the greenhouse (3) by the side of said mirrors (2) reflecting the light in a diffused manner, and that when there is a sufficient amount of solar radiation for the production of steam, they are directed towards the sun and towards the collector (4-5).

## Patentansprüche

1. Gewächshaus, umfassend einen Boden (23), undurchsichtige und isolierte aufrechtstehende Wände (24) und ein flaches Dach, das aus zumindest einem längsgerichteten, nahezu flachen Streifen (25) besteht, der undurchsichtig ist, **dadurch gekennzeichnet, dass** das flache Dach horizontal ist und aus einer Anzahl längsgerichteter Streifen besteht, die von Spiegeln (2) geformt werden, welche in Ost-/Westrichtung ausgerichtet sind,die um eine in ihre Längsrichtung gerichtete Rotationsachse rotieren können und die somit der Bewegung der Sonne gemäß den Jahreszeiten folgen können und die Oberseite des Gewächshauses (3) praktisch lichtdicht machen können, wenn sie in ihre horizontale oder liegende Position gedreht sind, wobei Mittel (27-30) zum Rotieren dieser Spiegel (2) und deren Ausrichten zur Sonne hin vorgesehen sind und wobei diese Spiegel (2) Teil einer Vorrichtung zur Produktion von Dampf sind, die zumindest einen über den Spiegeln (2) befindlichen Kollektor (4-5) umfasst und ein Rohr (5) für Fluid und einen Spiegel (4) zum Sammeln von durch die Spiegel (2) reflektierten Sonnenstrahlen und für deren Reflektieren zum Rohr (5) umfasst.

2. Gewächshaus gemäß Anspruch 1, **dadurch gekennzeichnet, dass** die Mittel (27-30) zum Rotieren der Spiegel (2) Mittel sind, die in der Lage sind, sie in Gruppen von mehreren Spiegeln (2) zu rotieren.

3. Gewächshaus gemäß Anspruch 1, **dadurch gekennzeichnet, dass** die Mittel (27-30) zum Rotieren der Spiegel (2) Mittel sind, die in der Lage sind, sie individuell zu rotieren.

4. Gewächshaus gemäß einem der vorgenannten Ansprüche, **dadurch gekennzeichnet, dass** die Spiegel (2) um eine in ihrer halben Breite befindlichen Achse rotieren können.

5. Gewächshaus gemäß einem der vorgenannten Ansprüche, **dadurch gekennzeichnet, dass** die Unterseite der Spiegel (2) das Licht auf eine diffuse Weise reflektiert.

6. Gewächshaus gemäß einem der vorgenannten Ansprüche, **dadurch gekennzeichnet, dass** es Teil einer Vorrichtung (1) zur Produktion von Dampf ist, der in einer Dampfturbine (11) zur Produktion von Elektrizität und/oder in einem Verdampfer (17) zur Entsalzung von Meerwasser verwendet wird.

7. Gewächshaus gemäß Anspruch 6, **dadurch gekennzeichnet, dass** durch dieses ein Rohr (33) vorgesehen ist, durch das Kühlwasser und/oder das produzierte Frischwasser zum Aufheizen des Gewächshauses und/oder zum Wässern der Pflanzen im Gewächshaus mittels damit verbundener Sprinkler (35-36) und/oder zum Garantieren des erforderlichen Feuchtigkeitsniveaus im Gewächshaus (3) fließt.

8. Gewächshaus gemäß Anspruch 2 oder 3, **dadurch gekennzeichnet, dass** die Mittel (27-30) zum Rotieren der Spiegel (2) eines Gewächshauses (3) mittels einer Steuervorrichtung derart gesteuert werden, dass sie, bei geringer Sonnenstrahlung, alle aufrechtstehend gedreht werden, sodass von der Seite besagter Spiegel (2), die das Licht auf diffuse Weise reflektiert, Licht in das Gewächshaus (3) reflektiert wird, und dass sie, wenn eine ausreichende Menge von Sonnenstrahlung für die Produktion von Dampf vorliegt, zur Sonne und zum Kollektor (4-5) gerichtet werden.

## Revendications

1. Serre comprenant une base (23), des parois verticales opaques et isolées (24) et un toit plat qui est constitué d'au moins une bande longitudinale pratiquement plate (25) qui est opaque, **caractérisée en ce que** le toit plat est horizontal et est constitué par plusieurs bandes longitudinales formées par des miroirs (2) qui sont orientés dans la direction de l'est/l'ouest, qui sont à même de tourner autour d'un axe de rotation orienté dans leur direction longitudinale et qui peuvent par conséquent suivre le mouvement du soleil en fonction des saisons et qui peuvent rendre le côté supérieur de la serre (3) pratiquement étanche à la lumière lorsqu'on les fait tourner dans leur position horizontale ou de repos, par laquelle on prévoit des moyens (27 - 30) pour faire tourner ces miroirs (2) et pour les orienter vers le soleil et par laquelle ces miroirs (2) font partie d'un dispositif pour produire de la vapeur comprenant au moins un collecteur (4 - 5) situé par-dessus les miroirs (2) et comprenant un tuyau (5) pour fluide et un miroir (4) pour récolter les rayons du soleil réfléchis par les miroirs (2) et pour les réfléchir en direction du tuyau (5).

2. Serre selon la revendication 1, **caractérisée en ce que** les moyens (27 - 30) pour faire tourner les miroirs (2) sont des moyens capables de les faire tourner par groupes de plusieurs miroirs (2).

3. Serre selon la revendication 1, **caractérisée en ce que** les moyens (27 - 30) pour faire tourner les miroirs (2) sont des moyens capables de les faire tourner de manière individuelle.

4. Serre selon l'une quelconque des revendications précédentes, **caractérisée en ce que** les miroirs (2) sont à même de tourner autour d'un axe situé à mi-distance sur leur largeur.

5. Serre selon l'une quelconque des revendications précédentes, **caractérisée en ce que** le côté inférieur des miroirs (2) réfléchit la lumière d'une manière diffuse.

6. Serre selon l'une quelconque des revendications précédentes, **caractérisée en ce qu'**elle fait partie d'un dispositif (1) pour produire de la vapeur que l'on utilise dans une turbine à vapeur (11) pour la production d'électricité et/ou dans un évaporateur (17) pour le dessalement de l'eau de mer.

7. Serre selon la revendication 6, **caractérisée en ce qu'**on prévoit un tuyau (33) qui la traverse, à travers lequel s'écoule de l'eau de refroidissement et/ou de l'eau fraîche générée pour chauffer la serre (3) et/ou pour arroser les plantes dans la serre à l'aide de dispositifs d'arrosage (35 - 36) reliés au premier cité et/ou pour garantir le niveau d'humidité requis dans la serre (3).

8. Serre selon la revendication 2 ou 3, **caractérisée en ce que** les moyens (27 - 30) pour faire tourner les miroirs (2) d'une serre (3) sont commandés par un dispositif de commande de telle sorte que, dans le cas d'un rayonnement solaire peu important, ils sont tous dressés par rotation de telle sorte que la lumière est réfléchie à l'intérieur de la serre (3) par le côté desdits miroirs (2) réfléchissant la lumière d'une manière diffuse, et dans le cas d'une quantité de rayonnement solaire suffisante pour la production de vapeur, ils sont orientés dans la direction du soleil et dans la direction du collecteur (4 - 5).
